# EUROPEAN PATENT APPLICATION

(11) **EP 1 515 506 A1**
(43) Date of publication of application: **16.03.2005**
(21) Application number: 03292206.4
(22) Date of filing: 09.09.2003
(51) Int. Cl.: H04L 29/06, H04Q 11/04

(54) **A method of establishing a data packet communication session between a terminal arrangements of a data packet network and an exchange therefore**

(71) Applicant: ALCATEL, 75008 Paris (FR)
(72) Inventor: Langenbucher, Gerhard G., Dr., 74321 Bietigheim-Bissingen (DE); Münch, Rainer, 71706 Markgröningen (DE); Kotar, Peter-Christos, 73207 Plochingen (DE)
(74) Representative: Brose, Gerhard, Dipl.-Ing.

(57) **Abstract**

The invention concerns a method of establishing a data packet communication session between a calling terminal arrangement (T1) and a called terminal arrangement (T2), the terminal arrangements terminating both a data packet network (IP) and a telephone network (PSTN), wherein a source exchange (EX1) of the telephone network (PSTN) receives at its interface to the calling terminal arrangement (T1) a first address information with the telephone number of the called terminal arrangement (T2) and the data packet network address of the calling terminal arrangement (T1), the source exchange (EX1) transmits a second address information message (M12) to a destination exchange (EX2) over the signalling network of said telephone network (PSTN) with the data packet network address of the calling terminal arrangement (T1), the destination exchange (EX2) transmits a third address information message (M13) to the called terminal arrangement (T2) with the data packet network address of the calling terminal arrangement (T1) and the called terminal arrangement transmits the data packet network address of the called terminal arrangement (T2) to the calling terminal arrangement (T1) over the data packet network (IP) or the telephone network (PSTN), as well as an exchange (EX1, EX2) therefore.

## Description

The invention concerns a method of establishing a data packet communication session according to the preamble of claim 1 and an exchange according to the preamble of claim 10 therefore.

Conventional connection-oriented telephone networks, for example, the public switched telephone network (PSTN) or the digital cellular GSM mobile telephony network (GSM: global system for mobile communication), both further referred to as telephone network, in order to establish a connection, i.e. a communication channel between a calling and a called user, execute a signalling protocol in which a network-side check is first performed to determine whether the called terminal address is known and whether this terminal is free. If the result is positive, the requested connection is established by means of selected switching centres within the telephone network.

In a connectionless packet data network, the terminals in principle communicate with one another without the mediation of network devices. No communication channels or connection paths are established. At the network nodes of such a network, so-called routers, each data packet is individually checked and forwarded in respect of its destination address. The best known network of this type is the so-called internet. On the internet, data packets are addressed through the so-called internet protocol (IP), referred to below as the IP protocol.

Normally, IP (network) terminals, especially those of private subscribers, do not have direct access to the internet and they do not have a fixed address. Those terminals access to the internet by means of access networks terminated by internet access servers. Frequently, the (public switched) telephone network serves as an access network.

Assigning a fixed address to all internet terminals in the whole world is impossible as long as the Internet Protocol Version 4 is used, as this version does not provide for a sufficient number of different IP addresses (the IP address consists of 32 bits). To cope with this shortage of IP addresses, the address assignment to the most internet terminals is dynamic. This is possible, because only a small percentage of all internet terminals is logged on to the internet at the same time. If a terminal is logged of, its internet address is free and can be assigned to a new terminal. The IP address assignment is carried out during the logon procedure between the internet terminal and the internet access server.

After the assignment of Internet addresses, the terminals can address each other directly by their IP addresses. However, as the IP addresses are not fixed, they cannot be known in advance like the addresses (E.164 telephone numbers) in the telephone network. A calling subscriber, who wishes to establish a communication session with a another subscriber must first determine the called user terminal IP address.

For establishing a communication session between IP terminals, a call signalling might be performed as defined by the so-called session initiation protocol (SIP) RFC 2543, proposed by the Internet Engineering Task Force (IETF). An alternative standard is set up within the ITU-T Recommendation H.323 published by the International Telecommunication Union with the title "Packet-based Multimedia Communications Systems".

Telephone subscribers, e.g. subscribers having an Integrated Services Digital Network (ISTN) access to the telephone network, e.g. a basic access or a primary rate access, can extend their communication capability for multimedia to the internet via a so-called Digital Subscriber Line.

Digital Subscriber Line (DSL) technology provides highspeed, broadband network connections to homes and small businesses. DSL utilises the same cabling already used as normal interfaces or connections between telephone terminals and the telephone network (telephone access lines), but it offers a connection to the internet with significantly higher data rates compared to so-called dial- in connections to the internet over the normal user to network interface. This is possible due to a so-called digital modem technology. A DSL splitter at terminals side divide the signals to be conducted either to the telephone terminal or to the internet terminal and a splitter at network side correspondingly divides the signals either conducted to the telephone network or conducted to the internet. The DSL technology includes two main branches: Symmetric DSL services provide with identical data rates upstream and downstream and asymmetric DSL with relatively lower rates upstream but higher rates downstream.

If an ISDN/PSTN user with DSL capabilities wants to establish an end-to-end IP connection to another user via their DSL accesses and the IP network, the two users have to exchange their dynamically allocated IP addresses to each other. This can be done by establishing a voice call via ISDN by dialling the E.164 called party number of the peer user and communicating the IP addresses. This manual exchange of addresses is a major obstacle for end-to-end multimedia communication over the internet.

The object of this invention is to overcome the drawback of manually exchanging the IP addresses. A mechanism is proposed to exchange the IP addresses via the telephone network.

This object is achieved, according to the invention, by a method according to the teaching of claim 1 and by an exchange according to the teaching of claim 10.

The fundamental concept of the invention is that, for establishing a data packet communication session between a calling terminal arrangement and a called terminal arrangement, the terminal arrangements terminating both a data packet network and a telephone network, a call signalling is carried out at least partly over the telephone network. Therefore, the calling terminal arrangements initiates a transmission of its data packet network address from the calling terminal arrangement to the called terminal arrangement using the telephone number of the called terminal arrangement. Subsequently, the called terminal arrangement returns its data packet network address to the calling terminal arrangement.

Further developments of the invention are disclosed by the sub-claims and the following description.

The invention is explained further in the following with reference to the accompanying drawings, wherein:
- Fig. 1: shows a communication system according to the invention with address messages of a first embodiment of a method according to the invention and
- Fig. 2: shows the same communication system with address messages of a second embodiment of a method according to the invention.

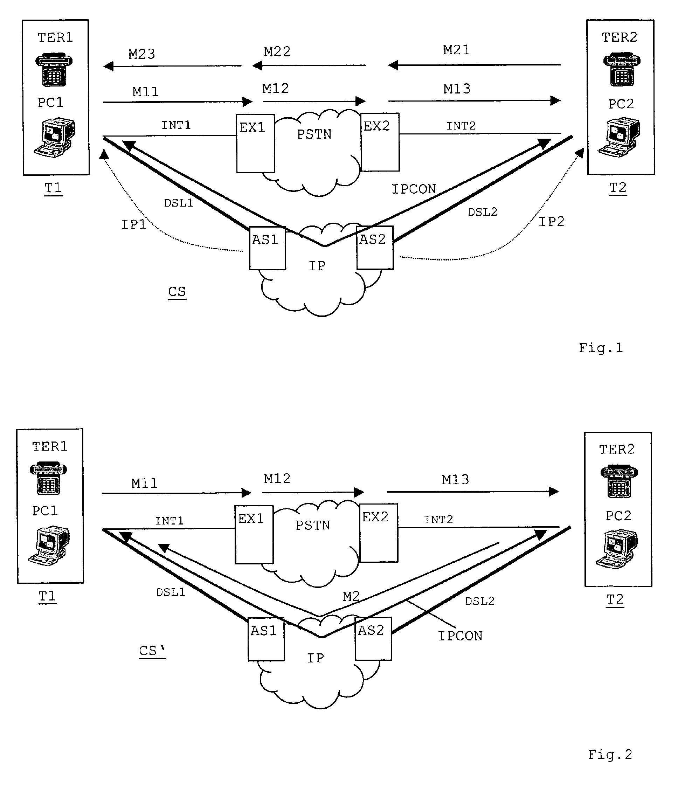

Fig.1 shows a communication system CS with a public switched telephone network PSTN, further referred to as telephone network PSTN, and a data packet network IP. The data packet network is preferably a network based on the internet protocol (IP) like the well known internet. Thus, the data packet network IP is further referred to as internet IP. A calling or first terminal arrangement T1, comprising a first telephone terminal part TER1 and a first internet terminal part PC1 is connected to a source or first exchange EX1 of the telephone network PSTN over a first telephone network interface INT1 and is further connected to a first access server AS1 of the internet IP over a first digital subscriber line DSL1. A called or second terminal arrangement T2, comprising a second telephone terminal part TER2 and a second internet terminal part PC2 is connected to a destination or second exchange EX2 of the telephone network PSTN over a second telephone network interface INT2 and is further connected to a second access server AS2 of the internet IP over a second digital subscriber line DSL2. A dotted arrow IP1 symbolises an assignment of a first internet address IP1 to the first terminal arrangement T1 and a dotted arrow IP2 symbolises an assignment of a second internet address IP2 to the second terminal arrangement T2. The arrows M11- M23 symbolises messages M11- M23 comprising address information of the first and/or second terminal arrangement T1, T2 The double arrow IPCON symbolises a communication session over the internet IP and the digital subscriber lines DSL1 and DSL2.

For the reason of simplification the access servers AS1 and AS2 comprises the functionality of physically terminating the DSL lines, i.e. DSL access multiplexers (DSLAM), access servers terminating the point to point transport and address assignment servers, e.g. so-called Domain Name Servers DNS. Every time, when a DSL connection is to be established, the Domain Name Server (DNS) will allocate a dynamic IP address, valid during the lifetime of the DSL connection.

Further not shown in Fig.1, there can be one or more transfer exchanges between the source exchange EX1 and the destination exchange EX2. Messages M12 or M22, send between said source and destination exchange are then forwarded by said transfer exchanges.

The terminal arrangements T1 and T2 preferably comprises an Integrated Service Digital Network (ISDN) terminal, a computer terminal with an internet browser and a DSL modem, both connected to a so-called DSL splitter combining outgoing signals of both terminals and splitting incoming signals to either the ISDN terminal or the computer terminal. All terminal arrangement functions can be realised in single physical units, partly combined, or integrated within one physical unit with different software applications for internet and telephone and corresponding different interface drivers.

Said ISDN/DSL terminals T1 or T2 are identified by two different types of addresses, with each one or more E.164 telephone numbers (Multiple Subscriber Numbers MSN) identifying his ISDN access and with each an IP address IP1 or IP2 and port address for the DSL/Internet access.

The internet protocol represents the characterising protocol layer of the protocol stack of the packet data network PN. This layer represents the so-called network layer of the so-called OSI layer model (OSI = open system interconnection). The network layer serves the purpose of network connection between (end-) users. Whereas, in a connection oriented telephone network(PSTN), classically a physical connection must be switched between the terminals, before any exchange of data can be carried out, in the internet each user can in principle access each other user without mediating network devices. No connection is established in this case. The data packets are addressed directly from user to user.

As above described, the principle of the method according to the invention is, that call signalling between the internet terminal parts PC1 and PC2 of the terminal arrangements T1 and T2 is carried out by a call signalling protocol over the telephone network PSTN, the protocol consisting of the messages M11- M23.

In the following, it is assumed, that the subscriber of the first terminal arrangement T1 initiates an Internet communication session over DSL, e.g. a voice over IP telephone call, with the subscriber of the second terminal arrangement T2. As the IP addresses IP1 and IP2 are not known by each other, a transfer of IP addresses to each other has to be carried out, before starting any communication can be started.

For said address exchanging, the messages M11- M32, sent in sequenced order, comprises the following address information:

The calling terminal arrangement T1 sends a first message M11 to the source exchange EX1, the first message comprising at least the (E.164) telephone number of the called terminal arrangement (T2), further referred to as called telephone number T2, and the internet address IP1 of the calling terminal arrangement, further referred to as calling internet address IP1.

The source exchange EX1, receiving the first message M11, determines on the base of the called telephone number T2 the destination exchange, to which the called terminal arrangement T2 is connected to and sends a second message M12 to said destination exchange EX2, the second message M12 comprising at least the called telephone number and the calling internet address IP1.

The destination exchange EX2, receiving the second message M12, sends a third message M13 to the called terminal arrangement T2, said message comprising at least the called telephone number and the calling internet address IP1.

The destination exchange EX2, receiving a forth message M21 sent from the called terminal arrangement T2, comprises at least the internet address IP2 of the called terminal arrangement T2.

The destination exchange EX2, receiving said forth message M21, sends a fifth message M22 back to the source exchange EX1, said message comprising at least the called internet address IP2 and the calling telephone number.

The source exchange EX1, receiving said fifth message M22, sends a sixth message M33 to the calling terminal arrangement, the message comprising at least the called internet address IP2 and the calling telephone number.

Both terminal arrangements T1 and T2 now each have the internet address of the peer terminal IP2 and IP1 and may start an internet communication session without any further aid of the telephone network PSTN.

In the above scenario, the messages M11- M23 are sent in a connectionless mode. Therefore, each the telephone number of the addressed telephone terminal servers for identification of the receiving network node EX1, EX2 or terminal T1, T2

In principle, all of those messages or part of these messages can also be sent in a connection oriented mode. If the messages are send in a connection oriented mode, a connection identifier can be assigned to the messages. In this case it is possible to omit the called telephone number from the second and/or third message M12, M13 and/or to omit the calling telephone number from the fourth , fifth and/or sixth message M21- M23.

For exchanging the IP address by a connectionless transport mechanism, a non bearer related message exchange is used (a bearer channel in the telephone network is a payload channel e.g. used for the voice communication between subscribers). For the ISDN interface between user and network , the European standard ETSI EN 300 196-1, issued by the European Telecommunication Standards Institute, chapter 8.3.2.2 defines e.g. a connectionless transport mechanism based on so-called FACILITY messages of the Digital Subscriber Signalling System Number one (DSS1) protocol with Dummy Call Reference with a specific value. This transport mechanism is using the already existing signalling capabilities of ISDN. The called user shall is by the called party number within the operation in the FACILITY message. The IP address is preferably transported as OCTET STRING.

In the following an exemplary ASN1 notation is given:

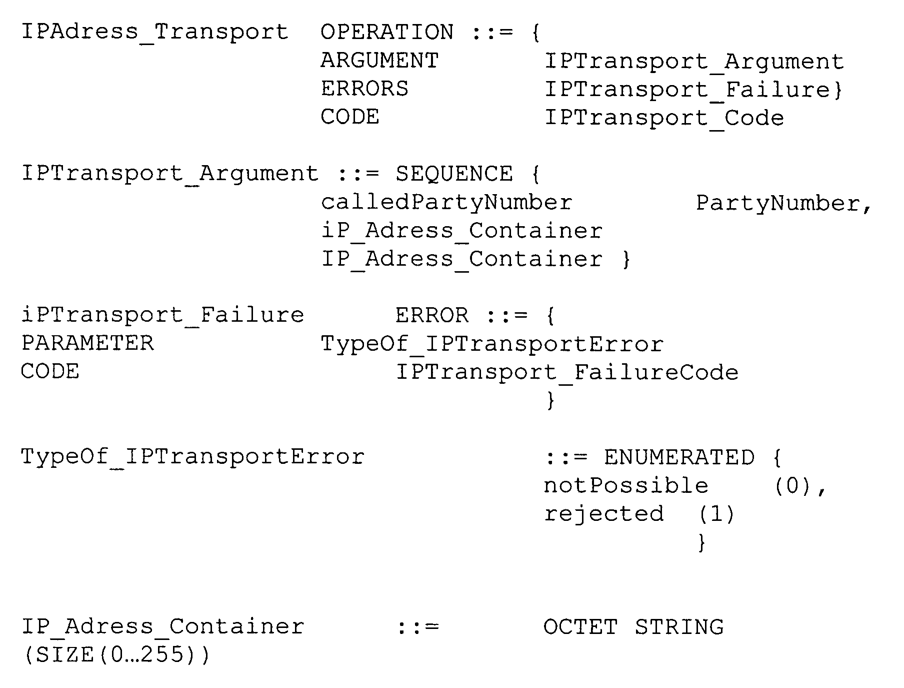

Alternatively, a non bearer related, connection oriented ISDN FAC message can be used. The FAC message in the connection oriented mode may be advantageously used, if additional control information should to be exchanged.

For the transport within the telephone network PSTN, the IP addresses are preferably transmitted by means of the so-called TCAP/SCCP/MTP protocol suite being part of the so-called signalling system number 7, defined by the International Telecommunication Union ITU:

TCAP (Transaction Capabilities Application Part) supports the exchange of non-circuit related data between applications across the SS7 network using the SCCP connectionless service. Queries and responses sent between network nodes are carried as application information elements (ASE) in TCAP messages. A TCAP message may comprise one or more information elements.

SCCP provides connectionless and connection-oriented network services and so-called global title translation (GTT) capabilities above MTP Level 3. SCCP is used as the transport layer for TCAP-based services.

The Message Transfer Part (MTP) is divided into three levels. The lowest level, MTP Level 1, is equivalent to the OSI Physical Layer. MTP Level 1 defines the physical, electrical, and functional characteristics of the digital signalling link. MTP Level 2 ensures accurate end-to-end transmission of a message across a signalling link. Level 2 implements flow control, message sequence validation, and error checking. When an error occurs on a signalling. MTP Level 2 is equivalent to the OSI Data Link Layer. MTP Level 3 provides message routing between signalling points in the SS7 network.

Message Transfer Part - Level 3 (MTP-3) transfers messages between the nodes of the signalling network. This part ensures reliable transfer of the signalling messages, even in the case of the failure of signalling links or nodes. The protocol therefore includes appropriate functions and procedures. MTP Level 3 e.g. re-routes traffic away from failed links and signalling points and controls traffic when congestion occurs. MTP Level 3 is equivalent to the OSI Network Layer.

If the TCAP based transport is not available a so-called ISDN User-to-User (Supplementary) Service (UUS) types 1,2,3 or sub addressing might be used for sending the messages M11- M32. This services require a set up of a bearer connection at least for a short period of time. Depending on the call state, any of differently defined UUS types 1,2,3 can be used. (Sub-addressing is a mandatory service of ISDN, the others are optional.) In the case of Sub Address service, the coding of the address information has to take into account the restricted length of the user information (20 bytes).

Instead of using the above defined Facility messages, User to User Bearer Service (formerly named User-to-User type 4), generating an additional bearer for packet communication, can be used.

If bearer related transport methods are used, the call/connection is preferably released immediately after the exchange of the required information.

In some cases, ISDN may not be available for supporting broadband accesses. In such cases, also procedures for analogue lines may be applied. This method is bearer related, a telephone call needs to be set up to the other destination. Afterwards in-band signalling from the calling terminal T1 to the source exchange EX1 is used for transmission of the IP address IP1 of the calling terminal T1. The exchange EX1 decodes the received address information and converts it for transmission in the network the same way as described for ISDN terminals, thus the same messages with the same parameters are transmitted across the telephone network. At the source exchange EX2, the information is converted and transmitted via FSK (Frequency Shift Keying) signalling (as also used for analogue display services like CLIPA, MWI). Generally, information from a terminal T1 or T2 to the telephone network PSTN can be transmitted via DTMF (Dual Tone Multiple Frequency), and from the telephone network PSTN to the terminals T1 and T2 by means of FSK signalling.

Alternatively to DSL, the invention can be carried out with any other broad band transmission means e.g. CATV (cable television) or Power Line transmission, combined with the telephone interface.

Within the called terminal arrangement T2, the third message M13 preferably triggers an automatic login to the internet, if not already logged in. As soon as the DSL connection is established and the internet address IP2 is allocated by the DNS, an application in the terminal arrangement T1 triggers the transmission of its internet address IP2 to the calling terminal arrangement T1.

Fig.2 shows an alternative method for transmitting the called IP address IP2 from the called terminal arrangement T2 to the calling terminal arrangement T1. Fig.2 therefore shows an alternative communication system CS' that is similar to the communication system CS shown in Fig.1, but the network nodes EX1, EX2 only realised such, that the messages M11, M12 and M13 are transmitted. Instead of the arrows M21, M22 and M32 shown in Fig.1 one, an arrow M2 is shown symbolising an address message conducted from the called terminal arrangement T2 over the second digital subscriber line DSL2, the internet IP and the first digital subscriber line DSL1 to the calling terminal arrangement second digital subscriber.

## Claims

1. A method of establishing a data packet communication session between a calling terminal arrangement (T1) and a called terminal arrangement (T2), the terminal arrangements terminating both a data packet network (IP) and a telephone network (PSTN), **characterised by** the following steps:
• a source exchange (EX1) of the telephone network (PSTN) receiving at its interface to the calling terminal arrangement (T1) a first address information message (M11), the address information comprising the telephone number of the called terminal arrangement (T2) and the data packet network address of the calling terminal arrangement (T1),
• the source exchange (EX1) transmitting a second address information message (M12) to a destination exchange (EX2) over the signalling network of said telephone network (PSTN), the address information comprising the data packet network address of the calling terminal arrangement (T1),
• the destination exchange (EX2) transmitting a third address information message (M13) to the called terminal arrangement (T2), the address information comprising the data packet network address of the calling terminal arrangement (T1) and
• transmitting the data packet network address of the called terminal arrangement (T2) to the calling terminal arrangement (T1) over one of said networks (IP, PSTN), the terminal arrangements (T1, T2) are terminating.

2. A method according to Claim 1, wherein the data packet network address transmission of the called terminal arrangement (T2) to the calling terminal arrangement (T1) is transmitted over the telephone network (PSTN) performing the following steps:
• the destination exchange (EX2) receiving at its interface to the called terminal arrangement (T2) a fourth address information message (M21), the address information comprising the data packet network address of the called terminal arrangement (T2),
• the destination exchange (EX2) transmitting said address information in a fifth address message (M22) to the source exchange (EX1) over the signalling network of said telephone network (PSTN) and
• the source exchange (EX1) transmitting a sixth address information message to the calling terminal arrangement (T1), the address information comprising the data packet network address of the called terminal arrangement (T2).

3. A method according to Claim 2, wherein for transmitting the address information between the source exchange (EX1) and the destination exchange (EX2) over the signalling network, the data packet addresses and the telephone numbers are embedded into an application layer message, said message being transported by means of a transport layer protocol in the connectionless mode.

4. A method according to Claim 3, wherein the signalling network is based on the signalling system number seven defined by the International Telecommunication Union, wherein the application layer message is a Transaction Capabilities Application Part message of the signalling system number seven, and said message being transported by means of the Signalling Connection Control Part protocol of the signalling system number seven.

5. A method according to Claim 1, wherein the address information of the second and the third address information messages (M12, M13) comprise the telephone number of the called terminal arrangement (T2).

6. A method according to Claim 1, wherein the address information of the fourth the fifth and the sixth address information messages (M21, M22, M23) comprise the telephone number of the calling terminal arrangement (T1).

7. A method according to Claim 2, wherein for transmitting the address information between the terminal arrangements (T1, T2) and each the corresponding exchange (EX1, EX2), the address information is embedded into facility messages send over the signalling interface.

8. A method according to Claim 2, wherein for transmitting the address information between the terminal arrangements (T1, T2) and each the corresponding exchange (EX1, EX2), a connection between the terminal arrangements (T1, T2) is established, the address information is sent over the bearer interface and after sending, the connection is released.

9. A method according to Claim 2, wherein additionally to the packet network addresses, each a corresponding port address identifying the specific terminal application destined for the data packed communication session is transmitted.

10. An exchange (EX1, EX2) of a telephone network (PSTN), having an interface to a first terminal arrangement (T1,T2), with receiving means for receiving from said terminal arrangement (T1,T2) an address information message the address information comprising a telephone number of a second terminal arrangement (T2) and transmitting means for transmitting said address information to an appropriate further exchange (EX2), **characterised in, that** embedding means for embedding the received address information, the address information additionally comprising a data packet network address of the first terminal arrangement, into a protocol frame for a transport over a signalling network to the further exchange (EX2) are comprised.

11. A communication system for establishing a data packet communication session between a calling terminal arrangement (T1) and a called terminal arrangement (T2), comprising a telephone network with an exchange (EX1, EX2) according to claim 10.
